# EUROPÄISCHE PATENTSCHRIFT

(11) **EP 1 385 731 B1**
(45) Veröffentlichungstag und Bekanntmachung des Hinweises auf die Patenterteilung: **06.10.2004**
(21) Anmeldenummer: 02766641.1
(22) Anmeldetag: 26.04.2002
(51) Int. Cl.: B60T 13/68, B60T 15/18, B60T 8/32

(54) **ELEKTROPNEUMATISCHES REGELVENTIL MIT EINEM BACKUPVENTIL**
ELECTROPNEUMATIC CONTROL VALVE WITH A BACKUP VALVE
VANNE DE REGULATION ELECTROPNEUMATIQUE DOTEE D'UNE VANNE DE SECOURS

(30) Priorität: 26.04.2001 DE 10120318
(43) Veröffentlichungstag der Anmeldung: 04.02.2004
(73) Patentinhaber: KNORR-BREMSE SYSTEME FÜR NUTZFAHRZEUGE GMBH, 80809 München (DE)
(72) Erfinder: ROETHER, Friedbert, 74389 Cleebronn (DE); DEJA, Siegmund, 71691 Freiberg (DE); SCHAFFERT, Eberhard, 71229 Leonberg (DE)
(86) Internationale Anmeldenummer: PCT/EP2002/004630
(87) Internationale Veröffentlichungsnummer: WO 2002/087949

(56) Entgegenhaltungen:
- DE-A- 3 931 761
- DE-A- 19 605 562
- DE-A- 19 918 070
- US-B1- 6 206 481

## Beschreibung

Die Erfindung betrifft ein elektropneumatisches Regelventil für ein Druckluftbremssystem eines Fahrzeuges, mit einem geteilten Ventilgehäuse, das aus einem unteren Relaisventilgehäuseteil und einem oberen Vorsteuerventilgehäuseteil besteht, die eine Steuerkammer einschließen, in der ein axial verstellbarer Steuerkolben geführt ist, der über eine im Vorsteuerventilgehäuseteil untergebrachten Vorsteuerventilanordnung beaufschlagbar ist, um den Druckluftfluss zwischen zumindest einem am Relaisventilgehäuseteil angeordneten Bremsleitungsanschluss, einem Speisedruckanschluss sowie einem Entlüftungsanschluss über eine innenliegende Ventilsitzanordnung zu schalten. Insbesondere betrifft die vorliegende Erfindung eine spezielle Anordnung der Anschlüsse am Ventilgehäuse.

Ein elektropneumatisches Regelventil dieser Art wird innerhalb eines Druckluftbremssystems eines Fahrzeuges eingesetzt, um einen Bremsdruck entsprechend der gewünschten - durch ein Fußbremspedal vorgebbaren - Bremswirkung auszuregeln. Eine vom Regelventil ausgehende Bremsleitung steht zu diesem Zwecke gewöhnlich mit einem Bremszylinder in Verbindung, der wiederum die zum Bremsen des Fahrzeuges benötigte Bremskraft erzeugt und an eine kolbenstangenseitig angeschlossene Scheiben- oder Trommelbremse weiterleitet. Die Vorgabe des Druck-Sollwertes für das elektropneumatische Regelventil kann sowohl elektrisch als auch pneumatisch erfolgen. Die pneumatische Ansteuerung wird meist jedoch nur zur Sicherheit im Falle eines Ausfalls der elektrischen Ansteuerung benutzt.

Ein gattungsgemäßes elektropneumatisches Regelventil ist aus der DE 39 31 761 C2 bekannt. Das Regelventil für ein Druckluftbremssystem eines Fahrzeuges weist ein zweigeteiltes metallisches Gehäuse auf. Am unteren Relaisventilgehäuse befindet sich ein Bremsleitungsanschluss, ein Speisedruckanschluss sowie ein Entlüftungsanschluss. Über eine innenliegende Ventilsitzanordnung, bestehend aus einem gegen zwei konzentrische Ventilsitze drückendes Verschlusselement, ist ein Druckluftfluss zwischen den äußeren Anschlüssen schaltbar. Zum Schalten wird das Verschlusselement gegen die Kraft einer Rückstellfeder axial betätigt. Die Betätigung des Verschlusselements erfolgt über einen ebenfalls im Relaisventilgehäuse innerhalb eines Hohlraumes angeordneten großflächigen Steuerkolben. Der Steuerkolben wird über einen Steuerdruck zur Längsverstellung beaufschlagt, wobei der Steuerdruck über eine Vorsteuerventilanordnung erzeugt wird. Die Vorsteuerventilanordnung ist innerhalb eines am Relaisventilgehäuse angebrachten Vorsteuerventilgehäuse angeordnet. Zur Einstellung oder Änderung des Steuerdrucks dienen zwei einzelne Elektromagnetventile. Das eine Elektromagnetventil ist stromlos geschlossen und kommuniziert über gehäuseinterne Druckmittelkanäle mit dem Speisedruckanschluss, der seitens des Relaisventilgehäuses angeordnet ist und über einen ventilinternen zum Vorsteuerventilgehäuse führenden Druckmittelkanal eine entsprechende Verbindung herstellt. Der Arbeitsanschluss dieses Elektromagnetventils ist mit der Steuerkammer verbunden. Das andere Elektromagnetventil dient zum Entlüften der Steuerkammer und ist stromlos geschlossen. Dieses Elektromagnetventil ist ebenfalls arbeitsleitungsseitig mit der Steuerkammer verbunden und steht über den seitens des Relaisventilgehäuses angeordneten Entlüftungsanschluss abluftseitig mit der Atmosphäre in Verbindung. Der Steuerdruck wird durch ein koordiniertes Bestromen beider Elektromagnetventile verändert. Diese Änderung erfolgt entsprechend einer Druckregelung mit Hilfe eines Drucksensors als Istwertgeber, der sich an der Arbeitskammer befindet. Die Vorgabe des Druck-Sollwertes erfolgt dabei elektrisch. Eine im Vorsteuerventilgehäuse integrierte Elektronikeinheit steuert dementsprechend die beiden Elektromagnetventile an.

Es ist im Stand der Technik weiterhin allgemein bekannt, neben den beiden insoweit als Einlassmagnetventil sowie Auslassmagnetventil ausgebildeten Elektromagnetventilen der Vorsteuerventilanordnung ein weiteres, als Backupventil bezeichnetes Elektromagnetventil vorzusehen Siehe z.B. das Dokument US 6 206 481B1. Das Backupventil ist ebenfalls im Vorsteuerventilgehäuse angeordnet und wird über einen am Vorsteuerventilgehäuse platzierten Steueranschluss angesteuert, um bei einem Ausfall der elektronischen Regelung - beispielsweise infolge Leitungsbruch - zur Sicherheit eine druckmittelgesteuerte Betätigung des Regelventils zu ermöglichen. Zu diesem Zwecke gelangt der Steuerdruck über das Backupventil in die Steuerkammer, um somit durch Bewegung des Steuerkolbens hilfsweise eine Betätigung der Ventilsitzanordnung zu ermöglichen. Von einem im Druckluftbremssystem vorgesehenen Fußbremsmodul wird der Steuerdruck im Normalfall über das Backupventil bestromt geschlossen zurückgehalten.

Durch die zusätzliche Anordnung des Backupventils im Vorsteuerventilgehäuse sind entsprechende zusätzliche ventilinterne Druckmittelkanäle erforderlich. Um hierbei kurze Leitungswege zu realisieren, wurde der Steueranschluss bisher ortsnah zum Backupventil am Vorsteuerventilgehäuse angeordnet.

Diese Anordnung des Steueranschlusses führt jedoch zu einem erhöhten Bearbeitungsaufwand des Vorsteuerventilgehäuses. Insbesondere sind zerspanende Arbeitsgänge erforderlich, um den Steueranschluss herzustellen.

Es ist die Aufgabe der vorliegenden Erfindung, ein elektropneumatisches Regelventil der vorstehend beschriebenen Art dahingehend weiterzuverbessern, dass der Herstellungsaufwand im Gehäusebereich gesenkt wird.

Die Aufgabe wird ausgehend von einem elektropneumatischen Regelventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass der Steueranschluss des Backupventils der Vorsteuerventilanordnung seitens des Relaisventilgehäuses angeordnet ist und über einen ventilinternen Druckmittelkanal mit dem seitens des Vorsteuerventilgehäuses untergebrachten Backupventil verbunden ist.

Der Vorteil dieser Maßnahme besteht darin, dass nunmehr eine zerspanungsfreie Herstellung des Vorsteuerventilgehäuses möglich ist. Sämtliche zerspanenden Arbeitsgänge sind nur am Relaisventilgehäuse erforderlich. Das zerspanungsfreie Vorsteuerventilgehäuse ist insoweit fertiggießbar.

Vorzugsweise ist der ventilinterne Druckmittelkanal ausgehend vom Steueranschluss im Relaisventilgehäuse über ein im Verbindungsbereich zum Vorsteuerventilgehäuse angeordneter Dichtring seitens des Vorsteuerventilgehäuses zum Backupventil geführt. Der Druckmittelkanal ist unmittelbar beim Gießen ausbildbar, ohne dass nachfolgend ein weiteres Spanen oder dergleichen erforderlich ist.

Der Dichtring kann dabei beispielsweise in einfacher Weise als O-Ring geformt sein. Bei der Montage des Regelventils ist der O-Ring in entsprechende nutartige Ausnehmungen im Verbindungsbereich zwischen dem Relaisventilgehäuse und dem Vorsteuerventilgehäuse einzulegen.

Gemäß einer die Erfindung verbessernden Maßnahme kann der Dichtring derart ausgebildet sein, dass es neben der Abdichtung des ventilinternen Druckmittelkanals auch zur abgedichteten Verbindung des Relaisventilgehäuses mit dem Vorsteuerventilgehäuse fungiert. Dieser insoweit funktionsintegrierte Dichtring ist einfach zu handhaben und vereinfacht die Montage des Regelventils.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
Figur 1 einen Längsschnitt durch ein elektropneumatisches Regelventil, und
Figur 2 eine schematische Darstellung der Anordnung aller ventilinterner Druckmittel- kanäle.

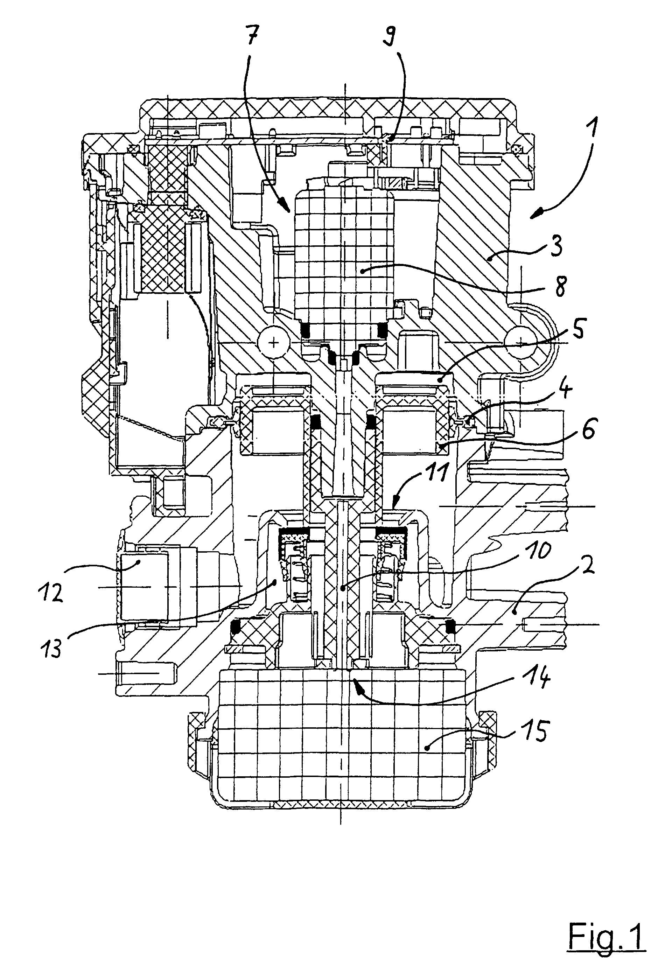

Gemäß Figur 1 besitzt das elektropneumatische Regelventil ein zweigeteiltes Ventilgehäuse 1, welches im einzelnen aus einem unteren Relaisventilgehäuse 2 und einem oberen Vorsteuerventilgehäuse 3 besteht. Das Vorsteuerventilgehäuse 3 ist mit dem Relaisventilgehäuse 2 über einen dazwischenliegenden Dichtring 4 verschraubt. Das Relaisventilgehäuse 2 und das Vorsteuerventilgehäuse 3 schließen eine innenliegende Steuerkammer 5 ein, in der ein Steuerkolben 6 axial bewegbar angeordnet ist. Zur axialen Verstellung des Steuerkolbens 6 dient eine im Vorsteuerventilgehäuse 3 untergebrachte Vorsteuerventilanordnung 7, von der hier lediglich ein als Auslassventil 8 dienendes Vorsteuerventil erkennbar ist. Die Vorsteuerventilanordnung 7 wird über eine ebenfalls im Vorsteuerventilgehäuse 3 angeordnete Elektronikeinheit 9 elektrisch angesteuert. Das gezeigte Vorsteuerventil entlüftet bei Betätigung die Steuerkammer 5, wobei die Abluft über einen Entlüftungskanal 10 an die Atmosphäre abgeleitet wird. Neben dem Auslassventil 8 ist ein zweites Vorsteuerventil als Einlassventil vorhanden, das für eine Beaufschlagung der Steuerkammer 5 mit einem Steuerdruck nach Maßgabe der Elektronikeinheit 9 dient, um den Steuerkolben 6 insoweit zu betätigen.

Bei der Beaufschlagung der Steuerkammer 5 betätigt der Steuerkolben 6 wiederum über eine untere hülsenartige koaxiale Anformung eine Ventilsitzanordnung 11. Die Ventilsitzanordnung 11 schaltet den Druckluftfluss zwischen einem am Relaisventilgehäuse 2 angeordneten Bremsleitungsanschluss 12 einerseits und einem (hier nicht erkennbaren) Speisedruckanschluss, der mit einer internen Speisedruckkammer 13 in Verbindung steht, sowie einem Entlüftungsanschluss 14. Der Entlüftungsanschluss 14 ist zusätzlich mit einem Schalldämpfer 15 zur Geräuschminderung der ausströmenden Abluft versehen.

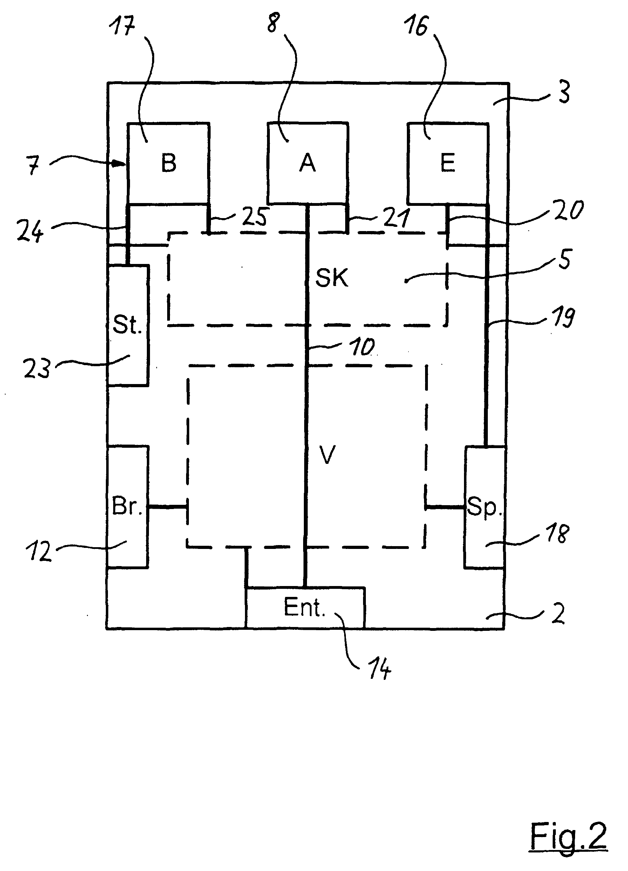

Gemäß der schematischen Darstellung nach Figur 2 sind im Vorsteuerventilgehäuse 3 neben dem Auslassventil 8, ein Einlassventil 16 sowie ein Backupventil 17 angeordnet. Vom seitens des Relaisventilgehäuses 2 angeordneten Speisedruckanschluss 18 führt ein Druckmittelkanal 19 zum Einlassmagnetventil 16, das arbeitsleitungsseitig über einen Druckmittelkanal 20 mit der Steuerkammer 5 in Verbindung steht. Eine Entlüftung der Steuerkammer 5 erfolgt über einen Druckmittelkanal 21, der zu diesem Zwecke am Auslassmagnetventil 8 angeschlossen ist und abluftseitig über den Entlüftungskanal 10 mit dem Entlüftungsanschluss 22 verbunden ist. Ein Steueranschluss 23 für das Backupventil 17 ist ebenfalls seitens des Relaisventilgehäuses 2 angeordnet. Vom Steueranschluss 23 verläuft ein Druckmittelkanal 24 zum Backupventil 17, der arbeitsleitungsseitig über einen Druckmittelkanal 25 mit der Steuerkammer 5 verbunden ist, um im Falle eines Ausfalls der elektrischen Ansteuerung für das Einlassmagnetventil 16 und das Auslassmagnetventil 8 eine Ventilsteuerung über den Steueranschluss 23 zu ermöglichen.

### Bezugszeichenliste

- 1: Ventilgehäuse
- 2: Relaisventilgehäuse
- 3: Vorsteuerventilgehäuse
- 4: Dichtring
- 5: Steuerkammer
- 6: Steuerkolben
- 7: Vorsteuerventilanordnung
- 8: Auslassventil
- 9: Elektronikeinheit
- 10: Entlüftungskanal
- 11: Ventilsitzanordnung
- 12: Bremsleitungsanschluss
- 13: Speisedruckkammer
- 14: Entlüftungsanschluss
- 15: Schalldämpfer
- 16: Einlassventil
- 17: Backupventil
- 18: Speisedruckanschluss
- 19: Druckmittelkanal
- 20: Druckmittelkanal
- 21: Druckmittelkanal
- 22: Entlüftungsanschluss
- 23: Steueranschluss
- 24: Druckmittelkanal

## Patentansprüche

1. Elektropneumatisches Regelventil für ein Druckluftbremssystem eines Fahrzeuges, mit einem geteilten Ventilgehäuse (1), das aus einem unteren Relaisventilgehäuse (2) und einem oberen Vorsteuerventilgehäuse (3) besteht, die eine Steuerkammer (5) einschließen, in der ein axial verstellbarer Steuerkolben (6) geführt ist, der über eine im Vorsteuerventilgehäuse (3) untergebrachten Vorsteuerventilanordnung (7) beaufschlagbar ist, um den Druckluftfluss zwischen zumindest einem am Relaisventilgehäuse (2) angeordneten Bremsleitungsanschluss (12), einem Speisedruckanschluss (18) sowie einem Entlüftungsanschluss (14) über eine innenliegende Ventilsitzanordnung (11) zu schalten, einem Backupventil im Vorsteuerventilgehäuse und mit einem Steueranschluß für das Backupventil **dadurch gekennzeichnet, dass** der Steueranschluss (23) des Backupventils (17) der Vorsteuerventilanordnung (7) seitens des Relaisventilgehäuse (2) angeordnet ist, und über einen ventilinternen Druckmittelkanal (24) mit dem seitens des Vorsteuerventilgehäuses (3) untergebrachten Backupventil (17) verbunden ist, um ein zerspanungsfrei herstellbares Vorsteuerventilgehäuses (3) zu schaffen.

2. Elektropneumatisches Regelventil nach Anspruch 1,
**dadurch gekennzeichnet, dass** der ventilinterne Druckmittelkanal (24) ausgehend vom Steueranschluss (23) im Relaisventilgehäuse (2) über ein im Verbindungsbereich zum Vorsteuerventilgehäuse (3) angeordneter Dichtring (4) hindurch im Vorsteuerventilgehäuse (3) zum Backupventil (17) geführt ist.

3. Elektropneumatisches Regelventil nach Anspruch 1 oder 2,
**dadurch gekennzeichnet, dass** der Dichtring (4) als dem Druckmittelkanal (24) zugeordneter O-Ring ausgebildet ist.

4. Elektropneumatisches Regelventil nach Anspruch 1 oder 2,
**dadurch gekennzeichnet, dass** der Dichtring (4) neben der Abdichtung des ventilinternen Druckmittelkanals (24) auch zur abgedichteten Verbindung des Relaisventilgehäuse (2) mit dem Vorsteuerventilgehäuse (3) ausgebildet ist.

## Claims

1. Electropneumatic control valve for a compressed-air brake system of a vehicle, comprising a split valve housing (1) composed of a lower relay valve housing (2) and an upper pilot valve housing (3), both enclosing a control chamber (5) in which an axially adjustable control plunger (6) is guided that can be controlled via a pilot valve means (7) accommodated in said pilot valve housing (3) for switching the flow of compressed air between at least one brake pipe connector (12) disposed on said relay valve housing (2), a supply pressure connector (18) as well as a venting connector (14) via an interior valve seat means (11), and a backup valve in said pilot valve housing and with a control connector for said backup valve, **characterised in that** said control connector (23) of said backup valve (17) in said pilot valve means (7) is arranged on the side of said relay valve housing (2) and connected via a compressed-medium passage (24) inside the valve to said backup valve (17) accommodated on the side of said pilot valve housing (3), for creating a pilot valve housing (3) adapted to be manufactured in a non-cutting operation.

2. Electropneumatic control valve according to Claim 1,
**characterised in that** said compressed-medium passage (24) interior of the valve starts out from said control connector (23) in said relay valve housing (2) and passes through a sealing ring (4) disposed in the zone for connection to said pilot valve housing (3) in said pilot valve housing (3) to said backup valve (17).

3. Electropneumatic control valve according to Claim 1 or 2,
**characterised in that** said sealing ring (4) is configured as an O-ring associated with said compressed-medium passage (24).

4. Electropneumatic control valve according to Claim 1 or 2,
**characterised in that** said sealing ring (4) is designed also for the sealed connection of said relay valve housing (2) to said pilot valve housing (3), in addition to the function of sealing said compressed-medium passage (24) inside the valve.

## Revendications

1. Vanne de régulation électropneumatique pour un système de freinage à air comprimé d'un véhicule, comprenant une cage de soupape (1) divisée et composée d'une cage de soupape (2) de relais inférieur et une cage de soupape supérieure (3) de la vanne pilote, toutes les deux cages renfermant une chambre de commande (5), dans laquelle est guidé un piston de commande (6), ajustable en sens axial, qui peut être commandé via un moyen à vanne pilote (7) accommodé dans ladite cage de soupape de la vanne pilote (3) afin de commuter le courant de l'air comprimé entre au moins un raccord (12) de la canalisation de freinage, qui est disposé à ladite cage de soupape (2) de relais, un raccord de pression d'alimentation (18) ainsi qu'un raccord de ventilation (14) via un moyen intérieur à siège de soupape (11), et une vanne de secours dans ladite cage de soupape de la vanne pilote et à un raccord de commande pour ladite vanne de secours,
**caractérisée en ce que** ledit raccord de commande (23) de ladite vanne de secours (17) dans ledit moyen à vanne pilote (7) est disposé du côté de ladite cage de soupape de relais (2) , en étant raccordé, via un canal de milieu comprimé (24) à l'intérieur de la vanne à ladite vanne de secours (17) reçue du côté de ladite cage de soupape de la vanne pilote (3), afin de créer une cage de soupape de la vanne pilote (3) apte à être fabriqué par un processus sans enlèvement de copeaux.

2. Vanne de régulation électropneumatique selon la revendication 1,
**caractérisée en ce que** ledit canal de milieu comprimé (24) à l'intérieur de la vanne départ dudit raccord de commande (23) dans ladite cage de soupape de relais (2) et s'étend à travers un anneau de gamiture (4) disposé dans la zone de raccord à ladite cage de soupape de la vanne pilote (3) dans ladite cage de soupape de la vanne pilote (3) vers ladite vanne de secours (17).

3. Vanne de régulation électropneumatique selon la revendication 1 ou 2,
**caractérisée en ce que** ledit anneau de gamiture (4) est conçu sous forme d'un joint torique affecté audit canal de milieu comprimé (24).

4. Vanne de régulation électropneumatique selon la revendication 1 ou 2,
**caractérisée en ce que** ledit anneau de garniture (4) est conçu aussi pour le raccord étanche de ladite cage de soupape de relais (2) à ladite cage de soupape de la vanne pilote (3), au plus de sa fonction d'assurer l'étanchéité dudit canal de milieu comprimé (24) à l'intérieur de la vanne.
